# DEMANDE DE BREVET EUROPEEN

(11) **EP 1 096 422 A1**
(43) Date de publication de la demande: **02.05.2001**
(21) Numéro de dépôt: 99121238.2
(22) Date de dépôt: 25.10.1999
(51) Int. Cl.: G06K 19/07

(54) **Interface entre un lecteur à contact et un dispositif sans contact**

(71) Demandeur: SWATCH AG, CH-2500 Biel (CH)
(72) Inventeur: Christophe, Berthaud, 2533 Evilard (CH)
(74) Mandataire: Thérond, Gérard Raymond

(57) **Abrégé**

Dispositif de communication (20) formant une interface entre un lecteur à couplage électrique (10), notamment à contact, et au moins un dispositif électronique sans contact (30) à couplage électromagnétique. L'interface (20) comprend d'une part des plages de couplage électrique (24), notamment des plages de contact résistifs, avec des éléments de couplage correspondants du lecteur (10) et, d'autre part, des moyens d'émission et/ou de réception d'ondes électromagnétiques (26), notamment une antenne, agencés pour permettre une communication avec le dispositif électronique sans contact (30). L'interface (20) comprend en particulier des moyens (28) de gestion du transfert de données entre les plages (24) et l'antenne (26) de manière à permettre une communication entre le lecteur (10) à couplage électrique, nécessitant l'introduction d'un dispositif avec des plages de couplage électrique, et le dispositif électronique sans contact (30). De préférence, le dispositif (30) est agencé dans un objet portable pouvant être fixé sur une partie du corps du porteur, notamment une montre.

## Description

La présente invention concerne le domaine de la communication entre un lecteur à couplage électrique, notamment résistif ou éventuellement capacitif, et un dispositif sans contact à couplage électromagnétique, notamment dans le domaine des ondes radio ou des ondes lumineuses.

De nombreux lecteurs, notamment du type bancaire ou pour effectuer l'achat de produits ou de services, sont à couplage électrique, c'est-à-dire à couplage de proximité et en particulier résistif. Ces lecteurs sont associés à des dispositifs électroniques présentant des plages de contact, notamment des cartes à contact, destinés à être introduits par une ouverture dans ces lecteurs.

Cependant, de tels dispositifs électroniques à contact sont généralement de dimensions réduites, notamment de faible épaisseur. Ceci pose un premier problème car l'intégration de moyens d'introduction de données ou d'affichage de données est limitée, de sorte que de tels dispositifs se limitent souvent à une simple identification et parfois à la modification par les lecteurs de données comprises dans des mémoires de ces dispositifs à contact. Ainsi, la communication d'instructions ou de données à un lecteur par le porteur du dispositif à contact se fait généralement au moyen d'unités additionnelles, notamment à l'aide d'un écran et d'un clavier.

Ensuite, de tels dispositifs à contact, en particulier sous forme de carte, peuvent difficilement être fixés au porteur pour éviter notamment qu'ils soient perdus ou volés. Ceci pose un deuxième problème que la présente invention se propose de résoudre.

La présente invention se propose donc de résoudre les problèmes susmentionnés et de fournir des moyens pour associer un dispositif de communication par ondes électromagnétiques à un lecteur à couplage électrique, c'est-à-dire ayant une tête de lecture comprenant des éléments de couplage électrique avec des plages correspondantes de dispositifs électroniques associés, ces plages devant être placées à proximité immédiate et en regard de ces éléments pour permettre une communication.

A cet effet, la présente invention concerne un dispositif de communication formant une interface entre un lecteur à couplage électrique et au moins un dispositif électronique sans contact à couplage électromagnétique, cette interface comprenant d'une part des plages de couplage électrique avec des éléments de couplage correspondants dudit lecteur et, d'autre part, des moyens d'émission et/ou de réception d'ondes électromagnétiques agencés pour permettre une communication avec ledit au moins un dispositif électronique sans contact, cette interface comprenant en outre des moyens de gestion des transferts de données entre lesdites plages de couplage électrique et lesdits moyens d'émission et/ou de réception d'ondes électromagnétiques de manière à permettre une communication entre ledit lecteur et ledit dispositif électronique sans contact.

Dans une variante donnée, les plages du dispositif de communication selon l'invention forment des plages à contact électrique et les ondes électromagnétiques émises et/ou reçues sont dans le domaine des fréquences radio. Dans une autre variante, les ondes électromagnétiques sont des ondes lumineuses et les moyens d'émission sont formés par une diode électroluminescente alors que les moyens de réception, lorsqu'ils sont prévus, sont formés par au moins un capteur lumineux. Par la suite, bien que cette deuxième variante peut présenter divers avantages d'utilisation ou de construction, on ne décrira en détail que la variante où les moyens d'émission et/ou de réception d'ondes électromagnétiques comprennent une antenne.

Dans un mode de réalisation préféré, le dispositif électronique sans contact est intégré dans un objet portable au poignet d'un utilisateur, en particulier dans une montre. Toutefois, la présente invention ne se limite pas au cas préféré où les dispositifs électroniques sans contact peuvent être fixés sur une partie du corps des porteurs de ces dispositifs, mais également à d'autres types de dispositif utilisés couramment, notamment les téléphones mobiles, les micro-ordinateurs portables ou les assistants électroniques personnels, par exemple du type agenda électronique. On notera ici que l'utilisation d'une montre comme réceptacle du dispositif électronique sans contact se distingue de ces derniers exemples par le fait qu'une montre résout le deuxième problème posé ci-avant, alors qu'un téléphone mobile ou un micro-ordinateur portable ne répondent généralement pas à ce deuxième problème à moins qu'ils soient intégrés justement dans un dispositif pouvant être fixé sur une partie du corps d'un utilisateur et plus particulièrement à son poignet.

Grâce aux caractéristiques de la présente invention, il est possible de communiquer avec un lecteur à couplage électrique nécessitant la présence de plages de couplage électrique pour le dispositif électronique associé et un dispositif électronique à couplage électromagnétique permettant à ce dispositif de communiquer à une certaine distance d'un lecteur sans qu'il y ait introduction d'une partie de ce dispositif électronique sans contact dans le lecteur.

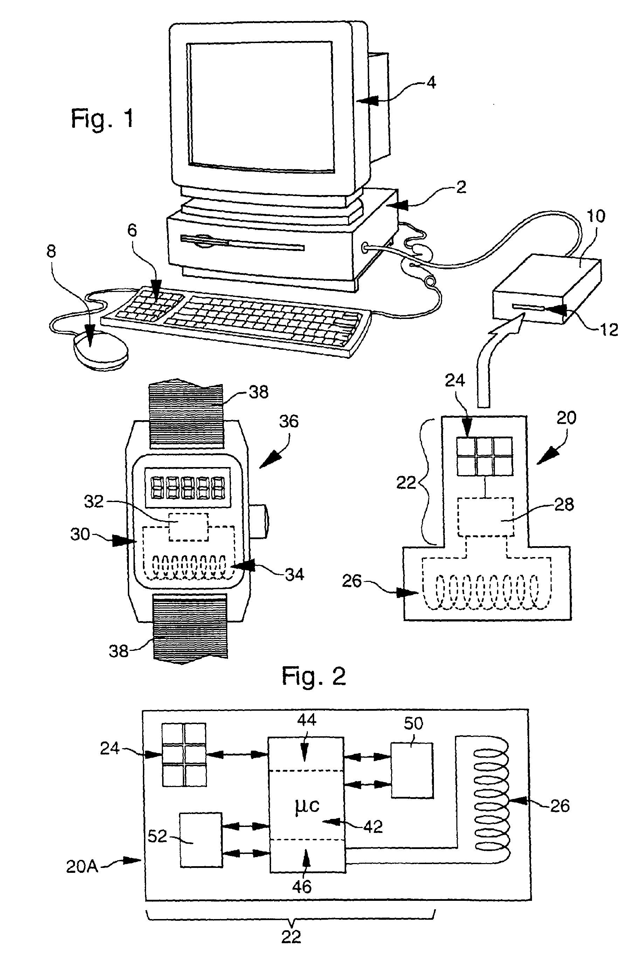

Divers modes de réalisation et caractéristiques particulières du dispositif de communication selon l'invention seront décrits ci-après plus en détail à l'aide de la description suivante, faite en référence aux figures 1 et 2 données à titre d'exemple nullement limitatif, dans lesquelles :
- la figure 1 représente schématiquement un dispositif de communication selon l'invention formant une interface de communication entre un lecteur de carte à contact associé à un ordinateur et une montre comprenant un dispositif électronique de communication sans contact associé à une antenne de réception et/ou d'émission d'ondes électromagnétiques;
- la figure 2 est un schéma montrant la structure interne d'un mode de réalisation du dispositif de communication selon l'invention.

A l'aide des figures 1 et 2 ci-après on décrira un mode de réalisation de l'invention, puis quelques variantes de réalisation.

Sur la figure 1 sont représentés un ordinateur 2 associé à un écran 4, un clavier 6 et une souris 8. Cet ensemble d'éléments peut former notamment un ordinateur personnel. L'ordinateur 2 est lié à un lecteur de carte 10 présentant une ouverture 12 pour l'introduction de cartes électroniques. On notera que les éléments 2 et 10 peuvent formés ensemble une seule unité dans laquelle peuvent être aussi intégrés les éléments 4, 6 et même 8 sous forme d'une bille de commande ou d'une plage sensible au toucher.

Le dispositif de communication 20, objet de la présente invention, forme une interface amovible dont une partie 22 présente des plages de contact électrique 24. Cette partie 22 peut être introduite dans l'ouverture 12 du lecteur 10 de manière à amener les plages de contact 24 en face d'une tête de lecture agencée pour permettre un couplage résistif avec ces plages 24.

L'interface 20 comprend également une antenne électromagnétique 26, formée notamment par une bobine, et une unité électronique de gestion des transferts de données entre les plages de contact électrique 24 et l'antenne 26.

L'antenne 26 permet d'émettre et/ou de recevoir des ondes électromagnétiques définissant des signaux électromagnétiques correspondant à des données ou des commandes. Ces données ou commandes sont reçues et/ou fournies par un dispositif électronique sans contact 30 formé d'une unité 32 de traitement des données et/ou commandes associée à une deuxième antenne électromagnétique 34. Les antennes 26 et 34 sont agencées de manière à pouvoir échanger entre elles des signaux électromagnétiques. Le dispositif électronique sans contact est agencé dans une montre 36 ayant un bracelet 38 permettant de le fixer au poignet d'un utilisateur.

L'unité électronique 32 de traitement des informations reçues du lecteur 10 via l'interface de communication 20 est agencée de manière conventionnelle pour traiter diverses instructions ou données et également, le cas échéant, pour fournir au lecteur des informations contenues dans des mémoires, notamment un code d'identification de l'utilisateur.

A la figure 2 est représenté un dispositif de communication 20A formant un mode de réalisation particulier de l'interface de communication 20 représenté à la figure 1.

L'interface de communication 20A comprend une unité électronique de gestion du transfert des données formée d'un micro-contrôleur 42 qui est associé d'une part, à un circuit d'interface 44 entre ce micro-contrôleur et les plages 24. D'autre part, ce micro-contrôleur est associé à un circuit 46 émetteur - récepteur d'ondes électromagnétiques via l'antenne 26. Le micro-contrôleur 42 et le circuit 44 sont associés à une première mémoire-tampon 50 permettant de stocker momentanément les données reçues du lecteur via les plages 24 avant leur traitement par le micro-contrôleur 42, ou de stocker momentanément des données traitées par ce micro-contrôleur et provenant de l'antenne 26 avant leur transmission au lecteur via les plages 24. Il est également prévu une deuxième mémoire-tampon 52 dans laquelle sont stockées momentanément des données provenant du circuit émetteur - récepteur 46 avant leur traitement par le micro-contrôleur 42, ou des données provenant du lecteur et traitées par ce micro-contrôleur avant que le circuit 46 les envoient via l'antenne 26 au dispositif électronique auquel ces données sont destinées.

Dans un cas particulier où le protocole de communication du lecteur correspond au protocole de communication du dispositif électronique sans contact 30, le micro-contrôleur 42 peut n'être formé que par un circuit électronique assurant le transfert de signaux électriques entre le circuit d'interface 44 et le circuit émetteur - récepteur 46, le cas échéant dans les deux sens de communication. Dans ce cas, il n'est pas prévu de traitement particulier des signaux électriques dans l'interface 20, 20A. La présence de mémoires-tampon peut être théoriquement supprimée, bien que pratiquement il soit préférable de disposer d'au moins une telle mémoire notamment pour de possibles problèmes de synchronisation entre les transferts des signaux électriques au niveau des plages à contact 24 et au niveau de l'antenne électromagnétique 26. Au moins une telle mémoire-tampon devient nécessaire dans le cas où la fréquence de transmission des signaux électriques entre le lecteur et le micro-contrôleur 42 est différente de la fréquence de transmission de signaux électriques correspondant entre ce micro-contrôleur et l'antenne 26. Dans ce dernier cas, le micro-contrôleur s'occupe de gérer l'adressage de la ou des mémoires-tampon prévue(s) et en particulier la différence du flux des signaux électriques entrant et sortant du dispositif de communication selon l'invention.

On remarquera toutefois que les protocoles de communication via des plages de contact électriques ou via une antenne électromagnétique sont généralement différents, étant donnée la nature différente de la transmission de données. Ainsi, la présente invention propose un mode de réalisation plus perfectionné que celui décrit ci-avant et permettant une communication entre un lecteur à couplage électrique et un dispositif électronique sans contact à couplage électromagnétique. Dans ce mode de réalisation, le micro-contrôleur 42 est agencé de manière à traiter les signaux électriques reçus de manière à produire d'une part des signaux électriques compatibles au protocole de communication via les plages 24 et d'autre part à produire des signaux électriques compatibles au protocole de communication via l'antenne 26. On distinguera ici au moins trois variantes particulières présentées ci-après.

Dans une première variante, seul le format des données est différent entre les deux protocoles de communication intervenant. Dans ce cas-ci, le micro-contrôleur 42 comprend des moyens pour changer le format des données entrant dans l'interface selon l'invention de manière à mettre ces données dans un format correspondant au protocole de communication des données sortant de cette interface. En nommant le protocole de communication entre le micro-contrôleur 42 et un lecteur via les plages 24 premier protocole de communication et en nommant deuxième protocole de communication le protocole de communication entre ce micro-contrôleur 42 et un dispositif électronique de communication sans contact via l'antenne 26, le micro-contrôleur 42 est agencé de manière à reformater les données reçues selon le premier ou deuxième protocole de communication pour les mettre dans le format correspondant respectivement au deuxième ou premier protocole de communication.

Dans une deuxième variante, le codage des données prévues dans les premier et deuxième protocoles de communication sont différents. Dans ce cas-ci, le micro-contrôleur 42 comprend des moyens pour décoder les données entrant selon le premier ou deuxième protocole de communication et pour encoder ensuite ces données conformément au deuxième, respectivement premier protocole de communication.

Dans une troisième variante de réalisation, au moins l'un des premier et deuxième protocoles de communication prévoit un transfert des données sécurisées. Pour ce faire, les données sont encryptées selon un algorithme déterminé. Dans ce cas-ci, le micro-contrôleur 42 comprend des moyens pour décrypter les données entrant selon ledit protocole de communication sécurisée. De plus, le micro-contrôleur 42 comprend également des moyens pour encrypter des données destinées à être transmises en sortie de l'interface selon l'invention par ladite interface sécurisée. Dans le cas où les premier et deuxième protocoles de communication sont sécurisés selon des algorythmes différents, le micro-contrôleur 42 est agencé pour décrypter dans un premier temps les données entrant dans l'interface selon le premier ou deuxième protocole de communication et pour encrypter ensuite ces données conformément au deuxième, respectivement premier protocole de communication avant de fournir ces données en sortie de l'interface.

## Revendications

1. Dispositif de communication (20, 20A) formant une interface entre un lecteur (10) à couplage électrique et au moins un dispositif électronique sans contact (30) à couplage électromagnétique, cette interface comprenant d'une part des plages (24) de couplage électrique avec des éléments de couplage correspondant dudit lecteur et, d'autre part, des moyens (26) d'émission et/ou de réception d'ondes électromagnétiques agencés pour permettre une communication avec ledit dispositif électronique sans contact, cette interface comprenant en outre des moyens de gestion du transfert de données entre lesdites plages de couplage électrique et lesdits moyens d'émission et/ou de réception de manière à permettre une communication entre ledit lecteur et ledit dispositif électronique sans contact.

2. Dispositif de communication selon la revendication 1, dans lequel lesdits moyens de gestion du transfert des données comprennent au moins une mémoire-tampon permettant de stocker momentanément les données lors de leur transfert entre lesdites plages de couplage électrique et lesdits moyens d'émissions et/ou de réception d'ondes électromagnétiques.

3. Dispositif selon la revendication 2, dans lequel la fréquence de réception de données par ce dispositif est différente de la fréquence de renvoi de ces données.

4. Dispositif selon la revendication 2 ou 3, caractérisé par le fait que le premier protocole de communication entre lesdits moyens de transfert de données et lesdites plages de couplage électrique est différent du deuxième protocole de communication entre ces moyens de transfert de données et lesdits moyens d'émission et/ou de réception d'ondes électromagnétiques.

5. Dispositif selon la revendication 4, caractérisé en ce que lesdits moyens de transfert de données comprennent des moyens pour changer le format des données entrant et correspondant audit premier ou deuxième protocole de communication dans un autre format correspondant respectivement au deuxième ou premier protocole de communication.

6. Dispositif selon la revendication 4 ou 5, caractérisé en ce que lesdits moyens de transfert de données comprennent des moyens pour décoder les données entrant selon ledit premier ou deuxième protocole de communication et pour encoder ensuite ces données conformément audit deuxième, respectivement premier protocole de communication.

7. Dispositif selon la revendication 6, caractérisé en ce que lesdits moyens de transfert de données comprennent en outre des moyens pour décrypter les données entrant selon ledit premier ou deuxième protocole de communication.

8. Dispositif selon la revendication 7, caractérisé en ce que lesdits moyens de transfert de données comprennent également des moyens pour encrypter les données reçues conformément audit deuxième, respectivement premier protocole de communication avant de les transmettre en sortie selon ce deuxième, respectivement premier protocole.

9. Dispositif selon l'une des revendications 2 à 8, caractérisée en ce qu'elle comprend une unité électronique formée d'un micro-contrôleur (42) et de deux mémoires-tampon (50, 52) agencées pour recevoir respectivement les données entrant ou sortant par lesdites plages de couplage électrique (24) et les données entrant ou sortant par lesdits moyens (26) d'émission et/ou de réception d'ondes électromagnétiques.

10. Dispositif selon l'une des revendications précédentes, caractérisé en ce qu'au moins une partie (22) de ce dispositif présente la forme d'une carte aux dimensions conventionnelles et portant lesdites plages de couplage électrique (24), cette partie (22) étant destinée à être introduite dans une ouverture (12) dudit lecteur (10).

11. Dispositif selon l'une des revendications précédentes, caractérisé en ce que lesdites plages de couplage électrique (24) sont des plages à contact permettant un couplage résistif audit lecteur (10).

12. Dispositif selon l'une des revendications précédentes, caractérisé en ce que ledit dispositif électronique sans contact (30) est agencé dans un objet portable (36) et pouvant être fixé sur une partie du corps d'un porteur.

13. Dispositif selon la revendication 12, caractérisé en ce que ledit objet portable est une montre (36).

14. Dispositif selon l'une des revendications 1 à 11, caractérisé en ce que ledit dispositif électronique sans contact est agencé dans un téléphone mobile.

15. Dispositif selon l'une des revendications 1 à 11, caractérisé en ce que ledit dispositif électronique sans contact est agencé dans un micro-ordinateur portable ou un assistant électronique personnel.
